# EUROPÄISCHE PATENTSCHRIFT

(11) **EP 1 383 232 B1**
(45) Veröffentlichungstag und Bekanntmachung des Hinweises auf die Patenterteilung: **27.05.2020**
(21) Anmeldenummer: 03013027.2
(22) Anmeldetag: 10.06.2003
(51) Int. Cl.: H02P 29/02, H02P 6/00, H02P 7/00

(54) **Verfahren zur Erhöhung der Verfügbarkeit eines Gebläsesystems**
Method for improving availability of a fan system
Méthode d'amélioration de la disponibilité d'un système de ventilateur

(30) Priorität: 16.07.2002 DE 10232166
(43) Veröffentlichungstag der Anmeldung: 21.01.2004
(73) Patentinhaber: Robert Bosch GmbH, 70442 Stuttgart (DE)
(72) Erfinder: Koch, Stefan, 77876 Kappelrodeck (DE); Buerk, Peter, 77839 Lichtenau-Grauelsbaum (DE)

(56) Entgegenhaltungen:
- EP-A- 0 081 891
- EP-A- 0 722 214
- DE-A1- 3 133 036
- DE-A1- 4 116 254
- DE-A1- 10 019 118
- US-A- 4 856 078
- US-A- 5 825 642

## Beschreibung

### Technisches Gebiet

Für Kühlgebläse an Verbrennungskraftmaschinen kommen heute Elektroantriebe zum Einsatz, die über Motoransteuermodule (Fan Control Module) betrieben werden. Über eine veränderliche, pulsweitenmodulierte Spannung (PWM) oder über ein variables Tastverhältnis (T_{V}) wird die Spannung an als Gleichstrommotoren ausgebildeten Elektroantrieben verändert, so dass die Drehzahl des elektrischen Antriebs beeinflusst werden kann.

### Stand der Technik

Bei bisher an Lüftermotoren und Gebläsen eingesetzten Motoransteuerungen wird eine Übertemperaturerkennung mittels eines Temperaturfühlers auf der Elektronikplatine realisiert. Als Temperaturfühler kommen vorwiegend solche Temperaturfühler zum Einsatz, die einen negativen Temperaturkoeffizienten aufweisen. Auf der Elektronikplatine sind die Elektronikkomponenten der Motorsteuerung aufgenommen, die während des Betriebes Verlustleistung als Wärme in die Elektronikplatine einleiten, deren Temperatur sich demzufolge erhöht. Wird eine bestimmte auf der Elektronikplatine der Motoransteuerung überschritten, so erfolgt ein Nullsetzen der Gebläseansteuerung, d.h. der elektrische Antrieb eines Lüftergebläses wird nicht mehr angesteuert. Zwischen dem Temperaturfühler und den Leistungsbauelementen auf der Elektronikplatine besteht eine thermische Kopplung.

Bei den bisherigen Vorgehensweisen erfolgt bei Überschreitung einer Grenztemperatur auf der Elektronikplatine ein Nullsetzen der Leistung der Gebläseansteuerung. Dies erfolgt unabhängig von der Versorgungsspannung und der Ansteuergröße (PWM) bzw. der Steuerspannung des elektrischen Antriebs. Die höchste Verlustleistung in der Gesamtelektronik tritt in den Leistungsschaltern (Low-Side Fet's) der Motoransteuerung sowie im Elektrolytkondensator, der zum Freilauf des Motorstroms vorgesehen ist, auf. Diese Verlustleistungen sind wiederum abhängig von der Motordrehzahl des elektrischen Antriebs. Die höchste Verlustleistung Pᵥ tritt bei einer nur leicht reduzierten Maximaldrehzahl des elektrischen Antriebs bei einem Tastverhältnis T_{V} von ca. 99 % auf. Die höchste Verlustleistung P_{V} im Elektrolytkondensator stellt sich bei einem Tastverhältnis T_{V} von etwa 80 % ein. Aus der DE 31 33 036 A1 ist ein Motordrehzahlsteuersystem bekannt. Aus der Zeitschriften-Veröffentlichung von Walter Marks und Dr. Siegfried Ritz mit dem Titel "Störungsfreie Motorsteuerungen", erschienen in Elektronik 12/2001 ist ein Motor-Regler bekannt, der in Abhängigkeit von einem gewählten Steuermodus einen DC-Motor regelt. Aus der US 5,825,642 A ist ein Netzteil mit einer proportionalen Lüftersteuerung bekannt.

### Darstellung der Erfindung

Mit dem erfindungsgemäß vorgeschlagenen Verfahren zur Ansteuerung eines elektrischen Antriebs kann die Verfügbarkeit eines Motorgebläse-Kühlsystems, um ein Beispiel zu nennen, erhöht werden. Dazu wird der elektrische Antrieb eines Kühlgebläses so betrieben, dass die Verlustleistung P_{V} von Elektronikkomponenten, wie zum Beispiel Leistungshalbleitern sinkt und eine Erhöhung der thermischen Wärmeableitung an den Elektronikkomponenten, die zur Ansteuerung des elektrischen Antriebs erforderlich sind, erreicht wird.

Die Verlustleistung P_{V} der Gesamtelektronik entsteht in vorwiegend in den Leistungsbausteinen auf der Low-Side, d.h. den Low-Side-Feldeffekttransistoren, mit denen der elektrische Antrieb über Pulsweiten-Modulation angesteuert wird sowie in Kondensatorbauelementen, so z.B. Elektrolytkondensatoren, die zur Ermöglichung eines Freilaufs des Motorstroms vorgesehen sind. Diese Verlustleistungen sind abhängig von der Drehzahl des elektrischen Antriebs. Die höchste Verlustleistung kann bei bestimmten Leistungshalbleiterbauelementen z.B. bei einer leicht reduzierten Maximaldrehzahl bei einem Tastverhältnis von etwa 99 % auftreten. Demgegenüber können sich die höchsten Verlustleistungen P_{V} von Elektrolytkondensatoren bei einem Tastverhältnis von T_{V} von ca. 80 % einstellen.

Bei einer langsam, aber stetig steigenden Temperatur in Richtung auf eine erste Grenztemperatur ϑ₁, wird anstelle einer Abschaltung eine Daueransteuerung eines als Lüftermotor an einem Gebläse eingesetzten elektrischen Antriebs vorgenommen. Der Temperaturanstieg der Elektronikplatine wird vorzugsweise mit einem Temperaturfühler mit negativem Temperaturkoeffizienten ermittelt und ergibt sich aus einem Anstieg der Umgebungstemperatur, der ein elektrischer Antrieb bzw. die Elektronikplatine ausgesetzt ist, so zum Beispiel die Ansauglufttemperatur eines Kühlgebläses, welche im Sommer höher liegt verglichen mit den Ansauglufttemperaturen, die in der kalten Jahreszeit auftreten. Ferner geht in den Anstieg der Temperatur die Verlustleistung von Leistungsbauelementen, die mit der Elektronikplatine elektrisch verbunden und in einem gemeinsamen Gehäuse mit dieser angeordnet sind, ein. Ein Temperaturanstieg kann dort ferner dann auftreten, wenn bei einer Verbrennungskraftmaschine, in deren Nähe beispielsweise die Elektronikplatine aufgenommen ist, die Temperatur ansteigt und durch Wärmeabstrahlung auf die Elektronikplatine einwirkt. Diese Daueransteuerung eines elektrischen Antriebs, wie zum Beispiel dem eines Kühlgebläses, kann über eine Diagnoseleitung an das eingesetzte Ansteuerungsmodul zurückgemeldet werden. Durch die Daueransteuerung, welche einem Tastverhältnis von 100 %, d.h. der Dauerbestromung des elektrischen Antriebs entspricht, wird die Verlustleistung P_{V} herabgesetzt, die ihr Maximum unterhalb eines Tastverhältnisses von T_{V} = 100 % erreicht. Bei einer Daueransteuerung wird der elektrische Antrieb außerhalb der hinsichtlich der auftretenden Verlustleistungen P_{V} kritischen Tastverhältnisse T_{V} = 80 %, hinsichtlich des Elektrolytkondensators bzw. T_{V} = 99 %, hinsichtlich der höchsten Verlustleistungen in den Leistungsbausteinen, betrieben. Mittels der Daueransteuerung kann die Wärmeableitung aufgrund der sich am elektrischen Antrieb der Gebläsekühlung einstellenden höheren Drehzahl und des dadurch bewirkten höheren kühlenden Luftstroms erreicht werden. Die Temperatur eines an der Elektronikplatine vorgesehenen Temperaturfühlers mit negativen Temperaturkoeffizienten wird sich innerhalb einer kurzen Abklingzeitspanne auf einen Wert unterhalb der ersten Grenztemperatur ϑ₁ verringern, so dass ein angeforderter Betrieb mit einem Tastverhältnis von beispielsweise 90 % wiederaufgenommen werden kann. Verglichen mit der Verlustleistung der auf der Elektronikplatine aufgenommenen Leistungsbauelemente ist der Verlustleistungsanteil des Elektrolytkondensators an der Gesamtverlustleistung relativ gering.

Wird hingegen aufgrund eines starken Temperaturanstiegs aufgrund der vorgenannten Einflussfaktoren wie zum Beispiel Jahreszeit (Temperatur eines Ansaugluftstroms), ansteigender Temperatur einer Verbrennungskraftmaschine usw., am Temperaturfühler mit negativen Temperaturkoeffizienten eine zweite Grenztemperatur ϑ₂, die oberhalb der erstgenannten Grenztemperatur ϑ₁ liegt, überschritten, so kann am Ansteuermodul des elektrischen Antriebs das Tastverhältnis auf seinen Minimalwert, d.h. T_{V} = 0 gesetzt werden. Bei Motorgebläsen an Kühlsystemen, die an Verbrennungskraftmaschinen von Kraftfahrzeugen eingesetzt werden, kann es aufgrund bestimmter Betriebsbedingungen zu einer Anforderung eines Tastverhältnisses von T_{V} von 80 % kommen, die mit einer langsamen Erhöhung der Temperatur des Temperaturfühlers mit negativem Temperaturkoeffizienten in Richtung auf die erste Grenztemperatur ϑ₁ verläuft, wobei eine hohe Versorgungsspannung am Generator der Verbrennungskraftmaschine auftreten kann. Auf das hinsichtlich dieser Betriebsparameter ungünstige Resultat einer hohen Verlustleistung P_{V} kann durch das erfindungsgemäß vorgeschlagene Verfahren dahingehend reagiert werden, dass anstelle einer Abschaltung des elektrischen Antriebs am Ansteuerungsmodul einer Daueransteuerung des elektrischen Antriebsgebläsekühlers eingestellt wird. Der einer Daueransteuerung des Lüftermotors entsprechende Zustand kann über eine separate Diagnoseleitung an das Ansteuerungsmodul (Fan Control Module) zurückgemeldet werden. Mit der Daueransteuerung, die vorzugsweise in einem Tastverhältnis von TV = 100 % erfolgt, lassen sich die Leistungshalbleiter bzw. der innerhalb der Motoransteuerung vorgesehene Elektrolytkondensator, ebenfalls außerhalb kritischer Tastverhältnisse von T_{V} = 99 % bzw. T_{V} = 80 % betreiben, so dass die Verlustleistung in den Leistungsbausteinen bzw. im Elektrolytkondensator verringert wird. Ferner wird durch die Daueransteuerung der elektrische Antrieb des Gebläsekühlers mit einer höheren Drehzahl betrieben, so dass aufgrund des einsetzenden Luftstroms eine verbesserte Wärmeableitung aufgrund von Konvektion erfolgt. Aufgrund der verbesserten Wärmeableitung von der Gesamtelektronik, die auf der Elektronikplatine des Ansteuerungsmoduls aufgenommen ist, stellt sich eine Verringerung der Temperatur an diese ein, so dass der angeforderte Betrieb mit einem bestimmten Tastverhältnis wiederaufgenommen werden kann.

Ein weiterer Betriebszustand, dem mittels des erfindungsgemäß vorgeschlagenen Verfahrens Rechnung getragen werden kann, kann durch eine bei erhöhter Umgebungstemperatur am Fahrzeuggenerator abfallende Versorgungsspannung gegeben sein. Es kann sich der Fall einstellen, dass bei erhöhter Temperatur, die über den Temperaturfühler mit negativem Temperaturkoeffizienten erfasst wird und die oberhalb der ersten Grenztemperatur ϑ₁ und unterhalb der zweiten Grenztemperatur ϑ₂ liegt, der angeforderte Betrieb mit einem Tastverhältnis von 90 % eingehalten werden kann. In diesem Betriebszustand kann über die auf der Elektronikplatine 4 aufgenommenen Bauelemente die Versorgungsspannung der Spannungsquelle 1 bzw. eine Generatorspannung gemessen werden. Aufgrund einer geringeren Verlustleistung bei kleineren Generatorspannungen kann die Verfügbarkeit eines Kühlgebläses beispielsweise erhöht werden und das Kühlgebläse auch im kritischen Temperaturbereich zwischen der ersten Grenztemperatur ϑ₁ und der zweiten Grenztemperatur ϑ₂ betrieben werden. In diesem Betriebszustand erfolgt die Änderung des Tastverhältnisses auf einer Daueransteuerung nicht aufgrund des Erreichens eines kritischen Temperaturwertes, sondern anhand der gemessenen Klemmenspannung, entweder der Klemmenspannung der Spannungsquelle oder der Klemmenspannung eines Fahrzeuggenerators.

### Zeichnung

Anhand der Zeichnung wird die Erfindung nachstehend näher erläutert.

Es zeigt:
- Figur 1: Die Ansteuerung eines elektrischen Antriebs über ein Ansteuermodul (Fan Control Module) sowie die dem Ansteuermodul zugeführten Eingangsgrößen und
- Figur 2: den Verlauf des Tastverhältnisses T_{V} zur Ansteuerung des elektrischen Antriebs, aufgetragen über der Temperatur.

### Ausführungsvarianten

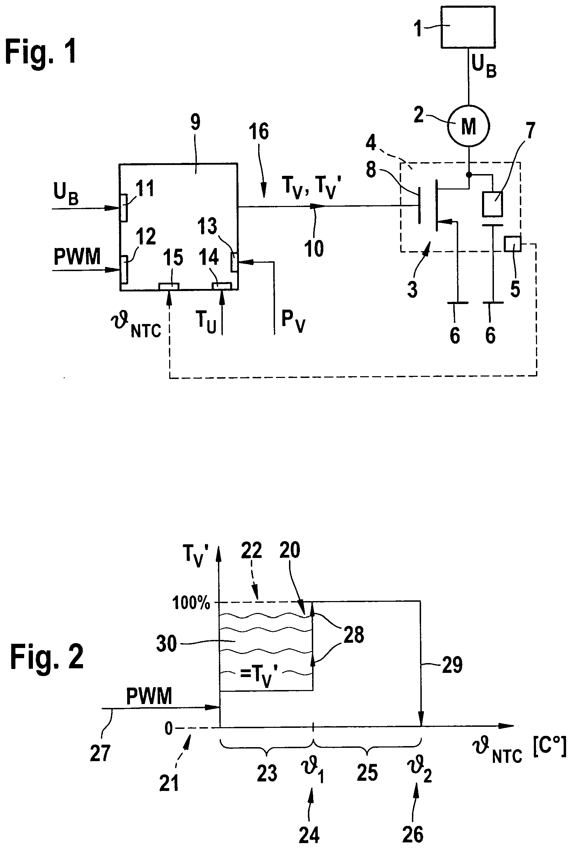

Figur 1 ist die Ansteuerung eines elektrischen Antriebs über ein Ansteuermodul (FCM) zu entnehmen sowie die Eingangsgrößen, die dem Ansteuermodul aufgegeben werden.

Über eine Spannungsquelle 1 in Gestalt einer Fahrzeugbatterie oder eines Bordnetzes innerhalb eines Kraftfahrzeugs wird ein elektrischer Antrieb 2 mit Spannung versorgt. Beim elektrischen Antrieb 2 handelt es sich - um ein Beispiel zu nennen - um einen Lüftermotor an einem Kühlgebläse im Kühlerbereich einer Verbrennungskraftmaschine des Kraftfahrzeugs. Der elektrische Antrieb 2 wird über einen oder mehrere Leistungsschalter 3, die mit einer Elektronikplatine 4 elektrisch verbunden sind, angesteuert. Die Elektronikplatine 4 und die Leistungsschalter 3 sind in einem gemeinsamen Gehäuse untergebracht. Der Leistungsschalter 3, der beispielsweise als ein FET-Transistor, als ein Bipolar-Transistor oder als ein IGCT-Bauelement beschaffen sein kann, wird über eine Ansteuerungsleitung (16) von einem Ansteuerungsmodul (Fan Control Module) 9 mit einem Tastverhältnis 10 T_{V} bzw. T_{V}' angesteuert. Dem als Transistor ausbildbaren Leistungsschalter 3 ist ein weiteres elektronisches Bauelement in Gestalt eines Kondensators parallel geschaltet. Über den Kondensator 5 kann ein Freilauf des Stroms erfolgen, wenn der Leistungsschalter 3 gesperrt ist. In diesem Falle lädt sich aufgrund des über den Kondensator 5 fließenden Stroms der Kondensator auf. Der schematisch in Figur 1 angedeutete Kondensator 5 kann beispielsweise als ein Elektrolytkondensator ausgebildet werden. Daneben sind andere Ausführungsmöglichkeiten des Kondensators 5 zum Beispiel als Folien- oder als Plattenkondensator denkbar. Auf der hier nur schematisch angedeuteten Elektronikplatine 4 können auch mehrere in verschiedenen Schaltungsvarianten geschaltete Leistungshalbleiter 3 angeordnet sein; aus Gründen der Vereinfachung ist auf der Elektronikplatine 4 gemäß Figur 1 lediglich ein Leistungsschalter 3 angedeutet. Der Leistungsschalter 3, der beispielsweise als Transistor ausgebildet werden kann, sowie der ebenfalls auf der Elektronikplatine 4 aufgebrachte Kondensator sind auf der Low-Side auf Masse 6 gelegt.

Im Falle der Ausbildung des Leistungsschalters 3 als Transistor wird dessen Transistorbasis 8 über eine Ansteuerleitung 16 in einem Tastverhältnis 10 T_{V} bzw. T_{V}' angesteuert. Zur Ansteuerung des Leistung 3 oder gegebenenfalls mehrerer Leistungsschalter 3, die mit der Elektronikplatine 4 elektrisch verbunden sind, dient ein mit Bezugszeichen 9 identifiziertes Ansteuerungsmodul. Dem Ansteuerungsmodul wird an einem Eingang 11 ein der Spannung der Spannungsquelle 1 entsprechendes Signal der jeweilige Wert der Spannung der Spannungsquelle zugeführt. An einem Eingang 12 für ein Pulsweiten-Modulations-Signal (Bezugszeichen 27, Fig. 2) liegt der diesem entsprechende Impuls an. Darüber hinaus wird dem Ansteuerungsmodul 5 an einem Eingang 15 die vom Temperaturfühler 5 ermittelte Temperatur der Elektronikplatine 4 bzw. der Leistungshalbleiter der Leitungsschalter 3 aufgegeben. Der auf der Elektronikplatine 4 angeordnete Temperaturfühler 5 ist ein solcher Temperaturfühler, der einen negativen Temperaturkoeffizienten aufweist.

Darüber hinaus wird dem Ansteuerungsmodul 9 (Fan Control Module) an einem Eingang 14 ein der Umgebungstemperatur entsprechendes Signal aufgegeben. An einem weiteren Eingang 13 steht am Ansteuerungsmodul 9 ein die generierte Verlustleistung P_{V} darstellendes Signal an. Das am Eingang 13 des Ansteuerungsmoduls 9 anstehende Signal kann aus den Betriebsbedingungen des elektrischen Antriebs 2 sowie aus dem Schaltverhalten der Leistungsschalter 3 errechnet werden. Aufgrund der Vermessung eines elektrischen Antriebs 2 sind die an den Leistungsschaltern 3 auftretenden Ströme und damit die dort abfallenden Verlustleistungen bekannt. Die bei Schaltvorgängen der Leistungsschalter 3 entsprechend des Taktverhältnisses unterhalb von 100 % auftretenden Schaltverluste nehmen bei einer Daueransteuerung, d.h. einer Dauerbestromung des Leistungsschalters 3 entsprechend des Tastverhältnisses T_{V} = 100 % ihr Minimum an, d.h. sind gleich 0. Verlustleistungsanteile treten bei einer Daueransteuerung des elektrischen Antriebs 2 über den Leistungsschalter 3 mit einem Tastverhältnis T_{V} von 100 % lediglich in den Leitungen auf. Demgegenüber nehmen die Verlustleistungsanteile der Leistungsschalter 3, die mit der Elektronikplatine 4 elektrisch verbunden sind und demzufolge zu deren Temperaturerhöhung beitragen, bei einem Tastverhältnis von beispielsweise 98 oder 96 % ihre Maximalwerte an. Werden bei Tastverhältnissen T_{V} von 98 % bzw. von 96 % zu den durch die Schaltvorgänge des Leistungsschalters 3 hervorgerufenen Verlustleistungen die ebenfalls auftretenden Leistungsverluste zugerechnet, nehmen die Gesamtverlustleistungsanteile Maximalwerte an. Dies gilt beispielsweise auch für Tastverhältnisse T_{V} von 94 % bzw. von 92 %. Aufgrund der Addition der Verlustleistungsanteile, die aus den Schaltvorgängen der Leistungsschalter 3 bzw. aus den Leistungsverlusten resultieren, sind Tastverhältnisse in einem zwischen einem Tastverhältnis T_{V} von 92 % bis 98 % liegenden Bereich höchst ungünstig hinsichtlich der auftretenden Gesamtverlustleistungen.

Mit dem erfindungsgemäß vorgeschlagenen Verfahren lassen sich die Tastverhältnisse T_{V}, in einem Bereich zwischen 92 % und 98 % vermeiden und auf ein modifiziertes Tastverhältnis T_{V}' von 100 % umschalten, bei dem die Gesamtleistungsverluste der auf der Elektronikplatine 4 aufgenommenen Leistungsschalter 3 ihr Minimum annehmen.

Das am Ansteuerungsmodul 9 anstehende, die Verlustleistung P_{V} repräsentierende Signal wird während des Betriebs des elektrischen Antriebs 2 und einer sich demzufolge einstellenden Erwärmung der Elektronikplatine 4 kontinuierlich oder innerhalb eines vorgebbaren Zeitrasters zu bestimmten, vorwählbaren Zeitpunkten errechnet. In die Bestimmung der Verlustleistung aus P_{V} geht einerseits eine Bestimmung der Verlustleistung eines Kondensatorbauelements beispielsweise eines Elektrolytkondensators ein, andererseits werden die sich einstellenden Verlustleistungsanteile der Gesamtverlustleistung P_{V} ermittelt, die sich während des Betriebs des elektrischen Antriebs 2 an dem mindestens einen Leistungsschalter 3 einstellen. Der Verlustleistungsanteil der Leistungsschalter 3 nimmt sein Maximum bei einem Tastverhältnis T_{V} von ca. 99 % ein, während der Verlustleistungsanteil an der Gesamtverlustleistung, die am Kondensatorbauelement entsteht, bei einem Tastverhältnis T_{V} von ca_{.} 80 % sein Maximum annimmt.

Figur 2 zeigt den Verlauf des Tastverhältnisses T_{V} zur Ansteuerung des elektrischen Antriebs gemäß Figur 1, aufgetragen über der Temperatur.

Der Darstellung gemäß Figur 2 ist entnehmbar, dass das Tastverhältnis T_{V} bzw. T_{V}' in einem Bereich zwischen einem minimalen Tastverhältnis T_{V} Bezugszeichen 21, welches 0 % entspricht und einem maximalen Tastverhältnis T_{V} Bezugszeichen 22, welches dem maximalen Tastverhältnis während der Daueransteuerung des elektrischen Antriebs 2 entspricht, eingestellt werden kann. Das am Ansteuerungsmodul 9 anliegende, ein gefordertes Tastverhältnis TV bewirkende PWM-Signal 27 stellt die Sollwertvorgabe dar, mit welcher der elektrische Antrieb 2 beispielsweise eines Kühlgebläses betrieben werden kann. Diese wird aus dem zentralen Steuergerät einer Verbrennungskraftmaschine bestimmt und ist abhängig von der Temperatur der Verbrennungskraftmaschine bzw. deren Last und der Umgebungstemperatur. Das PWM-Signal (ca. 100 Hz) ergibt die Sollansteuerung des elektrischen Antriebs 2 eines Kühlgebläses mit einem diesem PWM-Signal entsprechenden Tastverhältnis T_{V}. In einem zwischen der ersten und der zweiten Grenztemperatur ϑ₁ bzw. ϑ₂ liegenden Temperaturbereich kann dieses bei Auftreten bestimmter Betriebsbedingungen in ein modifiziertes Tastverhältnis T_{V}' verändert werden. Das modifizierte Tastverhältnis T_{V}' entspricht einem maximalen Tastverhältnis T_{V} von 100 %, welches für eine Dauerbestromung des elektrischen Antriebs sorgt. Bei diesem modifizierten Tastverhältnis T_{V}' werden einerseits die Verlustleistungen an den Leistungsschaltern 3 wegen Ausbleiben der Schaltvorgänge minimiert, andererseits stellt sich aufgrund der erhöhten Drehzahl des elektrischen Antriebs 2 bei Lüftern eine Luftdurchsatzleistung ein, die zu einer guten Kühlung der Elektronikplatine 4 beiträgt.

Während einer Betriebsphase des elektrischen Antriebs 2 eines Motorkühlgebläses an einem Kraftfahrzeug stellt sich eine Erwärmung der Elektronikplatine 4, auf der ein oder mehrere Leistungsschalter 3 angeordnet sind, ein. Über einen der Elektronikplatine 4 zugeordneten Temperaturfühler 5 mit negativem Temperaturkoeffizienten wird eine Temperatur *ϑ*_{NTC} erfasst. Während des Betriebes der Elektronikplatine 4 zur Ansteuerung des elektrischen Antriebs 2 über einen oder mehrere Leistungsschalter 3 stellt sich ein Temperaturanstieg auf eine erste Grenztemperatur ϑ₁ ein. Während des in Fig. 2 mit Bezugszeichen 23 gekennzeichneten Abschnitts kommt es demnach zu einer Temperaturerhöhung der Elektronikplatine 4 und der darauf aufgenommenen Leistungsschalter 3, was eine Zunahme der Gesamtverlustleistung P_{V} zur Folge hat, die sich aus den Verlustleistungsanteilen an dem einen oder mehreren Leistungsschalter 3 und den Kondensatorbauelementen an der Elektronikplatine 4 zusammensetzt. Wird die erste Grenztemperatur ϑ₁ vgl. Bezugszeichen 24 in Fig. 2, erreicht, wird das während der Aufwärmphase 23 eingestellte Tastverhältnis T_{V}, welches vom am Steuermodul 9 liegenden Pulsweiten-Signal 27 abhängt, auf seinen Maximalwert T_{V}' = 100 % gesetzt. Dies ist der Darstellung gemäß Fig. 2 durch eine Hochsetzung 28 des Tastverhältnisses bei einer Temperatur, die der Temperatur ϑ₁ entspricht, dargestellt. Ab Erreichen der ersten Grenztemperatur ϑ₁ Bezugszeichen 24, wird der elektrische Antrieb 2 über den einen oder mehrere Leistungsschalter 3 in Daueransteuerung, entsprechend einem Tastverhältnis T_{V}' von 100 % betrieben. Dieser Betriebszustand der Daueransteuerung der ein oder mehreren Leistungsschalter 3 zur Ansteuerung des elektrischen Antriebs 2 kann, falls erforderlich, über eine Diagnoserückleitung an das Ansteuerungsmodul 9 rückgemeldet werden. Aufgrund einer Daueransteuerung des oder der Leistungsschalter 3 mit einem Tastverhältnis T_{V}' von 100 % kann die Gesamtverlustleistung P_{V}, die an der Elektronikplatine entsteht, verringert werden. Durch das modifizierte Tastverhältnis T_{V}', welches bei der Daueransteuerung einem Tastverhältnis T_{V} von 100 % entspricht, wird einerseits die an den einen oder mehreren Leistungsschalter 3 auf der Elektronikplatine 4 entstehende Verlustleistungsanteil verringert, da die maximale Verlustleistung an dem einen oder mehreren Leitungsschaltern 3 bei einem Tastverhältnis T_{V} von 99 % und darunter entsteht. Andererseits wird durch das modifizierte Tastverhältnis T_{V}', mit dem der elektrische Antrieb 2 im Rahmen der Daueransteuerung angesteuert wird, das Tastverhältnis T_{V} = 80 % umgangen, bei welchem Kondensatorbauelemente ihren maximalen Verlustleistungsanteil an der Gesamtverlustleistung aufweisen.

Bei der Daueransteuerung des elektrischen Antriebs 2 mit einem modifizierten Tastverhältnis T_{V}' von 100 %, welches dem maximalen Tastverhältnis 22 gemäß der Darstellung in Fig. 2 entspricht, stellt sich eine erhöhte Drehzahl am elektrischen Antrieb 2 und damit an dem diesem zugeordneten Lüfterrad ein. Aufgrund der erhöhten Drehzahl des elektrischen Antriebs 2 ist ein eine erhöhte Wärmeableitung begünstigender Luftstrom die Folge, welcher einen konvektiven Wärmetransport von der Elektronikplatine 4 begünstigt. Damit wird erreicht, dass die über den Temperaturfühler 5 mit negativen Temperaturkoeffizienten erfasste Temperatur *ϑ*_{NTC} unter die erste Grenztemperatur ϑ₁ absinkt und der geforderte Betrieb mit einem vorgegebenen Tastverhältnis T_{V} wiederaufgenommen werden kann.

Stellt sich hingegen an der Elektronikplatine 4 und daran aufgenommenen Kondensatorbauelementen ein weiterer Temperaturanstieg in Richtung auf eine zweite hinsichtlich der von der generierten Verlustleistung kritischen Grenztemperatur 26 (ϑ₂) ein, so erfolgt eine Rücknahme des Tastverhältnisses T_{V} auf den Minimalwert 21, d.h. das Verhältnis T_{V}' wird auf 0 gesetzt.

Ist beispielsweise aufgrund des PWM-Signals 27, welches am Eingang 12 des Ansteuerungsmoduls 9 anliegt, ein Tastverhältnis T_{V} von 80 % vorgegeben und tritt ein langsam verlaufender Temperaturanstieg auf der Elektronikplatine 4 in Richtung auf die erste Grenztemperatur ϑ₁ auf und fallen diese Bedingungen mit einer hohen Versorgungsspannung zusammen, kann ebenfalls gemäß des vorgeschlagenen Verfahrens der elektrische Antrieb 2 in Daueransteuerung, d.h. mit einem modifizierten Tastverhältnis T_{V}' = 100 % angesteuert werden. Eine Rückmeldung des Zustands der Daueransteuerung an das Ansteuerungsmodul 9 (Fan Control Module) kann über eine separate Diagnoseleitung an diesen erfolgen. Auch in diesem Betriebszustand wird durch die Daueransteuerung des elektrischen Antriebs 2, d.h. von dessen Leistungsschaltern 3 hinsichtlich der Verlustleistungsgenerierung ungünstige Tastverhältnisse T_{V} = 99 % hinsichtlich der Leistungsschalter 3 und T_{V} = 80 % hinsichtlich der Kondensatorbauelemente, vermieden, so dass die Gesamtverlustleistung, die an der Elektronikplatine 4 generiert wird, in der Summe sinkt. Aufgrund der sich bei der Daueransteuerung mit einem Tastverhältnis T_{V}' = 100 %, welches dem maximalen Tastverhältnis 22 entspricht, einstellenden höheren Drehzahl steigt der eine Kühlung der Elektronikplatine 4 ermöglichende Luftstrom, der durch den dem elektrischen Antrieb 2 zugeordneten Lüfter erzeugt wird, an. Aufgrund dessen kann eine Temperaturverringerung aufgrund eines sich einstellenden konvektivkühlenden Luftstromes erzielt werden.

Eine weitere Möglichkeit zur Aufrechterhaltung des Betriebs eines elektrischen Antriebs 2 eines Motorgebläses und damit einer Vermeidung bei erhöhter Umgebungstemperatur T_{U} am Fahrzeuggenerator der Verbrennungskraftmaschine einer sich einstellender verminderter Versorgungsspannung des Ansteuerungsmoduls kann oberhalb einer ersten Grenztemperatur ϑ₁ und unterhalb einer zweiten Grenztemperatur ϑ₂ innerhalb eines zweiten Temperaturbereichs 25 erreicht werden. Um die Verfügbarkeit des elektrischen Antriebs 2 eines Kühlgebläses zu erhöhen, welches einem Kühlmittelkreislauf einer Verbrennungskraftmaschine zugeordnet ist, kann bei einer bei höheren Temperaturen auftretenden verringerten Generatorspannung des Drehstromgenerators der Verbrennungskraftmaschine der elektrische Antrieb zwischen der ersten Grenztemperatur ϑ₁ und der zweiten Grenztemperatur ϑ₂ betrieben werden. Bei abnehmender Generatorspannung nehmen auch die in der Elektronikplatine 4 durch die Leistungsschalter 3 generierten Verlustleistungen ab. Die Abnahme der Versorgungsspannung bzw. der Fahrzeuggeneratorspannung kann durch den Abgriff der Anschlussklemmen erfasst werden. Bei verringerter Generatorspannung des Drehstromgenerators einer Verbrennungskraftmaschine kann der elektrische Antrieb 2 eines Kühlgebläses auch zwischen den Grenztemperaturen ϑ₁ und ϑ₂ mit einem Tastverhältnis T_{V} = 100 %, welches dem maximalen Tastverhältnis 22 entspricht, betrieben werden.

Über das Ansteuerungsmodul 9 (Fan Control Module) kann eine Umschaltung des Tastverhältnisses T_{V} entsprechend der in Fig. 2 dargestellten Hochsetzung 28 erst ab einer bestimmten Minimalanforderung, so z.B. ab einem Tastverhältnis T_{V} ≥ 30 % wirksam werden. Mit Bezugszeichen 30 sind Wellenlinienverlauf aus dem PWM-Signal 27 generierte unterschiedliche Tastverhältnisse T_{V} angedeutet, die Sollwertanforderungen darstellen, mit denen, jeweils vorgegeben über das zentrale Motorsteuergerät, der elektrische Antrieb 2 eines Kühlgebläses betrieben werden soll. Mit Bezugszeichen 20 ist der Verlauf des Tastverhältnisses bezeichnet, welches durch ein durch das PWM-Signal 27 vorgegebenes Tastverhältnis T_{V} auf ein modifiziertes Tastverhältnis T_{V}' umgeschaltet werden kann, welches dem maximalen Tastverhältnis 22 entspricht und eine Dauerbestromung des elektrischen Antriebs unter Vermeidung von Schaltvorgängen an den Leistungsschaltern 3 entspricht. Dabei entstehende Verlustleistungen in den Leistungsschaltern 3 nehmen bei maximalem Tastverhältnis 22 (T_{V} = 100 %) ihr Minimum an. Mit Bezugszeichen 29 ist in Figur 2 die Rücksetzung des Tastverhältnisses auf ein minimales Tastverhältnis 21 (T_{V} = 0) dargestellt. Anstelle der Rücksetzung 29 auf das minimale Tastverhältnis 21 (T_{V} = 0) kann auch eine Rücksetzung auf das zuvor geforderte, dem PWM-Signal 27 entsprechende Tastverhältnis T_{V} vorgenommen werden.

Mit dem erfindungsgemäß vorgeschlagenen Verfahren kann eine Temperaturmessung durch einen Temperaturfühler 5, der einer Elektronikplatine 4 zugeordnet ist und der einen negativen Temperaturkoeffizienten aufweist, erfolgen, so dass der Temperaturverlauf auf der Elektronikplatine 4 während des Betriebs des elektrischen Antriebs 2 erfasst wird. Durch die Modifikation des Tastverhältnisses T_{V}, jeweils abhängig vom Erreichen bzw. Überschreiten einer ersten Grenztemperatur ϑ₁ (Bezugszeichen 24) bzw. einer zweiten Grenztemperatur ϑ₂ (Bezugszeichen 26) kann bei Erwärmung der Elektronikplatine 4 die Gesamtverlustleistung P_{V}, die sich aus Verlustleistungsanteilen an den Leistungsschaltern 3 und aus Verlustleistungsanteilen an den an der Elektronikplatine 4 aufgenommenen Kondensatorelementen zusammensetzt, so reduziert werden, dass sich eine Erhöhung der Verfügbarkeit eines Motorgebläse-Kühlsystems einstellt. Ein weiterer sich durch die Daueransteuerung des elektrischen Antriebs 2 ergebende Vorteil ist darin zu erblicken, dass aufgrund einer sich bei der Daueransteuerung des elektrischen Antriebs 2 ergebende Luftstrom, der die Elektronikplatine 4 und die mit dieser verbundenen Leistungsschalter 3 und die Kondensatorbauelemente überstreicht, eine verbesserte Wärmeableitung und damit eine schnellere Abkühlung der Elektronikplatine 4 erzielt werden kann.

### Bezugszeichenliste

- 1: Spannungsquelle
- 2: elektrischer Antrieb
- 3: Leistungsschalter
- 4: Elektronikplatine
- 5: Temperaturfühler
- 6: Masse
- 7: Kondensator
- 8: Transistorbasis
- 9: Ansteuerungsmodul (FCM)
- 10: modifiziertes Tastverhältnis
- 11: Eingangssignal U_{Bat}
- 12: Eingangssignal PWM
- 13: Eingangssignal P_{V}
- 14: Eingang Umgebungstemperatur T_{U}
- 15: Eingang *ϑ*_{NTC}
- 16: Ansteuerleitung
- 17:
- 18:
- 19:
- 20: Verlauf Tastverhältnis T_{V}
- 21: Minimales Tastverhältnis (T_{V} = 0)
- 22: Maximales Tastverhältnis T_{V} (100 %)
- 23: erste Aufwärmphase
- 24: erste Grenztemperatur ϑ₁
- 25: weitere Aufwärmphase
- 26: zweite Grenztemperatur ϑ₂
- 27: PWM-Signal
- 28: Hochsetzung Tastverhältnis T_{V} bei ϑ₁
- 29: Rücksetzung Tastverhältnis T_{V} bei ϑ₂
- 30: PWM-generierte Tastverhältnisse T_{V}

## Patentansprüche

1. Verfahren zur Ansteuerung eines elektrischen Antriebs (2), der als Lüftermotor für ein Kühlgebläse im Kühlerbereich einer Verbrennungskraftmaschine eines Kraftfahrzeugs ausgebildet ist, über ein Ansteuerungsmodul (9), das mit einer Elektronikplatine (4) elektrisch verbundene Leistungsschalter (3) über ein Tastverhältnis Tv ansteuert,
mit nachfolgenden Verfahrensschritten:
a) Einstellen des die Leistungsschalter (3) des elektrischen Antriebs (2) ansteuernden momentanen Tastverhältnisses Tv an dem Ansteuerungsmodul (9) entsprechend einem PWM-Signal (27), welches eine Sollwertvorgabe darstellt, die abhängig von einer Temperatur der Verbrennungskraftmaschine ist, und
b) bei Erreichen einer ersten Grenztemperatur 91 (24) der die Leistungsschalter (3) ansteuernden Elektronikplatine (4) wird das momentane Tastverhältnis Tv auf ein modifiziertes, maximales Tastverhältnis (22) Tv' geändert, welches eine Daueransteuerung des elektrischen Antriebs (2) bewirkt, und wobei die Verlustleistung von Elektronikkomponenten der Elektronikplatine (4) sinkt, und wobei durch die eingestellte höhere Drehzahl des elektrischen Antriebs (2) ein erhöhter Luftstrom erzeugt wird, der eine verbesserte Wärmeableitung der Elektronikplatine (4) aufgrund von Konvektion ermöglicht, und
c) bei Erreichen einer zweiten Grenztemperatur ϑ₂ (26), die höher liegt als die erste Grenztemperatur ϑ₁ (24), wird das momentane Tastverhältnis Tv auf ein modifiziertes, minimales Tastverhältnis (21) Tv' = 0 zurückgenommen.

2. Verfahren gemäß Anspruch 1, **dadurch gekennzeichnet, dass** die Grenztemperaturen ϑ₁ , ϑ₂ (24, 26) mittels eines Temperaturfühlers (5) erfasst werden, der einen negativen Temperaturkoeffizienten aufweist.

3. Verfahren gemäß Anspruch 1, **dadurch gekennzeichnet, dass** das PWM-Signal (27) aus einem zentralen Steuergerät der Verbrennungskraftmaschine bestimmt wird, und dass dieses insbesondere abhängig von der Temperatur der Verbrennungskraftmaschine oder deren Last und der Umgebungstemperatur ist.

4. Verfahren gemäß Anspruch 1, **dadurch gekennzeichnet, dass** bei einer Daueransteuerung das hinsichtlich der Verlustleistungsgenerierung bei Kondensatorbauelementen ungünstige Tastverhältnis Tv= 80% vermieden wird.

5. Verfahren gemäß Anspruch 1, **dadurch gekennzeichnet, dass** das momentane Tastverhältnis TV bei Erreichen der ersten Grenztemperatur 91 (24) im Ansteuerungsmodul (9) sprungartig hochgesetzt wird.

6. Verfahren gemäß Anspruch 1, **dadurch gekennzeichnet, dass** das Tastverhältnis TV bei Erreichen der zweiten Grenztemperatur 92 (26) sprungartig auf ein minimales Tastverhältnis zurückgesetzt wird.

7. Verfahren gemäß Anspruch 1, **dadurch gekennzeichnet, dass** das Tastverhältnis TV bei einer Abkühlung der mit den Leistungsschaltern (3) elektrisch verbundenen Elektronikplatine (4) auf einen durch das PWM-Signal (27) vorgegebenes Tastverhältnis TV zur Ansteuerung der Leistungsschalter (3) zurückgesetzt wird.

## Claims

1. Method for actuating an electrical drive (2), which is designed as a linear motor for a cooling fan in the radiator region of an internal combustion engine of a motor vehicle, by means of an actuation module (9) which actuates the circuit breakers (3), which are electrically connected to an electronics printed circuit board (4), by means of a duty ratio Tv,
comprising the following method steps
a) setting the instantaneous duty ratio Tv, which drives the circuit breakers (3) of the electrical drive (2), on the actuation module (9) in accordance with a PWM signal (27) which represents a prespecified setpoint value which is dependent on a temperature of the internal combustion engine, and
b) when a first limit temperature ϑ₁ (24) of the electronics printed circuit board (4), which actuates the circuit breakers (3), is reached, the instantaneous duty ratio Tv is changed to a modified, maximum duty ratio (22) Tv' which effects continuous actuation of the electrical drive (2), and wherein the power loss from electronics components of the electronics printed circuit board (4) drops, and wherein, owing to the set higher rotation speed of the electrical drive (2), an increased air flow is generated which allows improved heat dissipation from the electronics printed circuit board (4) on account of convection, and
c) when a second limit temperature ϑ₂ (26), which is higher than the first limit temperature ϑ₁ (24), is reached, the instantaneous duty ratio Tv is returned to a modified, minimum duty ratio (21) Tv' = 0.

2. Method according to Claim 1, **characterized in that** the limit temperatures ϑ₁, ϑ₂ (24, 26) are detected by means of a temperature sensor (5) which has a negative temperature coefficient.

3. Method according to Claim 1, **characterized in that** the PWM signal (27) is determined from a central controller of the internal combustion engine, and **in that** the said PWM signal is, in particular, dependent on the temperature of the internal combustion engine or the load on the said internal combustion engine and the ambient temperature.

4. Method according to Claim 1, **characterized in that**, in the event of continuous actuation, the duty ratio Tv = 80%, which is unfavourable in respect of the power loss generation in capacitor components, is avoided.

5. Method according to Claim 1, **characterized in that** the instantaneous duty ratio Tv is suddenly raised when the first limit temperature ϑ₁ (24) is reached in the actuation module (9).

6. Method according to Claim 1, **characterized in that** the duty ratio Tv is suddenly reset to a minimum duty ratio when the second limit temperature ϑ₂ (26) is reached.

7. Method according to Claim 1, **characterized in that** the duty ratio Tv is reset to a duty ratio Tv for actuating the circuit breakers (3), which duty ratio is prespecified by the PWM signal (27), in the event of cooling of the electronics printed circuit board (4) which is electrically connected to the circuit breakers (3) .

## Revendications

1. Procédé de commande d'un système d'entraînement électrique (2), qui est réalisé sous la forme d'un moteur de ventilateur destiné à un ventilateur de refroidissement dans la zone du radiateur d'un moteur à combustion interne d'un véhicule automobile, par l'intermédiaire d'un module de commande (9) qui commande des commutateurs de puissance (3) reliés électriquement à une carte électronique (4) selon un rapport cyclique Tv,
comprenant les étapes de procédé suivantes :
a) sur le module d'entraînement (9), régler le rapport cyclique instantané Tv qui commande les commutateurs de puissance (3) du système d'entraînement électrique (2), en conformité avec un signal PWM (27) qui représente une valeur de consigne dépendant d'une température du moteur à combustion interne, et
b) lorsqu'une première température limite θ1 (24) de la carte électronique (4) commandant les commutateurs de puissance (3) est atteinte, le rapport cyclique instantané Tv est modifié en un rapport cyclique maximal (22) Tv' qui provoque un actionnement continu du système d'entraînement électrique (2), et dans lequel la perte de puissance des composants électroniques de la carte électronique (4) diminue, et dans lequel un débit d'air plus élevé est généré par le système d'entraînement électrique (2) afin de permettre une meilleure dissipation thermique de la carte électronique (4) par convection, et
c) lorsqu'une seconde température limite θ2 (26) supérieure à la première température limite θ1 (24) est atteinte, le rapport cyclique instantané Tv est ramené à un rapport cyclique minimum modifié (21) Tv' = 0.

2. Procédé selon la revendication 1, **caractérisé en ce que** les températures limites θ1, θ2 (24, 26) sont détectées au moyen d'un capteur de température (5) qui présente un coefficient de température négatif.

3. Procédé selon la revendication 1, **caractérisé en ce que** le signal PWM (27) est déterminé à partir d'une unité centrale de commande du moteur à combustion interne et **en ce que** celle-ci dépend notamment de la température du moteur à combustion interne ou de sa charge et de la température ambiante.

4. Procédé selon la revendication 1, **caractérisé en ce qu'**en cas de commande continue, le rapport cyclique Tv = 80 %, qui est défavorable en ce qui concerne la génération d'une perte de puissance dans les composants condensateurs, est évité.

5. Procédé selon la revendication 1, **caractérisé en ce que** le rapport cyclique instantané TV est brusquement augmenté dans le module de commande (9) lorsque la première température limite θ1 (24) est atteinte.

6. Procédé selon la revendication 1, **caractérisé en ce que** le rapport cyclique TV est brusquement ramené à un rapport cyclique minimum lorsque la seconde température limite θ2 (26) est atteinte.

7. Procédé selon la revendication 1, **caractérisé en ce que**, lorsque la carte électronique (4) reliée électriquement aux commutateurs de puissance (3) refroidit, le rapport cyclique TV est ramené à un rapport cyclique TV prédéterminé par le signal PWM (27) pour commander les commutateurs de puissance (3).
